# EUROPÄISCHE PATENTANMELDUNG

(11) **EP 1 003 070 A1**
(43) Veröffentlichungstag der Anmeldung: **24.05.2000**
(21) Anmeldenummer: 98121561.9
(22) Anmeldetag: 18.11.1998
(51) Int. Cl.: G03B 27/46

(54) **Verfahren zur Herstellung von fotografischen Bildern**

(71) Anmelder: GRETAG IMAGING AG, CH-8105 Regensdorf (CH)
(72) Erfinder: Näf, Markus, 8032 Zürich (CH)
(74) Vertreter: Schwabe - Sandmair - Marx

(57) **Zusammenfassung**

Für die Herstellung von grossformatigen fotografischen Bildern wird eine Bildvorlage (V) in eine aus Zeilen (1-4) und Spalten (A-D) bestehende Matrixanordnung von Teilbildvorlagen (A₁....D₄) mit zu den Spalten der Matrixanordnung parallelen Seitenrändern (R) eingeteilt. Mittels eines Printers wird von den einzelnen Teilbildvorlagen auf einem fotografischen Kopiermaterial (P) durch sequentielle Aufbelichtung eine lineare Anordnung von aufeinander folgenden latenten Teilbildern erzeugt, wobei die Aufbelichtung so erfolgt, dass die den Seitenrändern der Teilbildvorlagen entsprechenden Seitenränder (R) der latenten Teilbilder parallel zur Längsrichtung (L) der linearen Anordnung der latenten Teilbilder verlaufen. Das belichtete Kopiermaterial (P) wird in einer Durchlaufentwicklungseinrichtung entwickelt, wobei von jeder Teilbildvorlage eine Teilbildkopie entsteht, und die Teilbildkopien werden zu einem Gesamtbild (K) zusammengesetzt. Zur Vermeidung von Farb- und/oder Dichtesprüngen im Bereich der Trennlinien zwischen den einzelnen Teilbildkopien werden diejenigen latenten Teilbilder (B₁-B₄,D₁-D₄), die den in jeder zweiten Spalte (B,D) der Matrixanordnung liegenden Teilbildvorlagen (B₁-B₄,D₁-D₄) entsprechen, gegenüber den latenten Teilbildern, die den Teilbildvorlagen in den anderen Spalten der Matrixanordnung entsprechen, jeweils um 180° in ihrer eigenen Ebene gedreht durch die Durchlaufentwicklungseinrichtung geführt.

## Beschreibung

Die Erfindung betrifft ein Verfahren zur Herstellung von fotografischen Bildern mittels eines Printers gemäss dem Oberbegriff des unabhängigen Anspruchs.

Allgemein unter der Bezeichnung Printer bekannte fotografische Belichtungsvorrichtungen arbeiten üblicherweise mit Kopiermaterial mit standardisierten Breiten, welche das Maximalformat der herstellbaren Kopien begrenzt. Überformatige Kopien, beispielsweise Poster und dgl., werden durch Montage von kleineren Teilbildern erzeugt. Dazu wird die Bildvorlage in eine Anzahl von Teilbildvorlagen passenden Formats eingeteilt, und von diesen Teilbildvorlagen wird durch aufeinanderfolgendes Aufbelichten auf das üblicherweise bahnförmige Kopiermaterial und anschliessendes Entwickeln des Kopiermaterials in einer Durchlaufentwicklungsvorrichtung ein Satz von Teilbildkopien erzeugt. Diese werden dann zurechtgeschnitten und zum gewünschten Gesamtbild montiert.

Üblicherweise erfolgt die Einteilung der Bildvorlage nach einem Matrix-Schema mit Zeilen und Spalten. Die Zeilen der matrixförmigen Anordnung verlaufen parallel zu den jeweiligen Ober- und Unterkanten der einzelnen Teilbildvorlagen, die Spalten verlaufen parallel zu den den Seitenrändern der Teilbildvorlagen. Die einzelnen Teilbildvorlagen werden in derselben Orientierung in einer linearen Anordnung hintereinander auf das üblicherweise bahnförmige Kopiermaterial aufbelichtet. Die Aufbelichtung der einzelnen Teilbildvorlagen erfolgt dabei so, dass die Seitenränder der Teilbildvorlagen parallel zu den die Breite des Kopiermaterials festlegenden Längsrändern desselben verlaufen oder im Extremfall mit diesen zusammenfallen. Die Längsränder des Kopiermaterials verlaufen parallel zur Transportrichtung des Kopiermaterials durch den Printer und die Durchlaufentwicklungsvorrichtung. Im Falle von Blattmaterial gilt diese Definition sinngemäss.

Bei auf diese Weise hergestellten, aus einzelnen Teilbildern zusammengesetzten Bildern treten im Bereich der Trennlinien zwischen den einzelnen Spalten des Bilds vielfach unerwünschte bis nicht tolerierbare Farb- und/oder Dichteunterschiede auf, welche von den praktisch unvermeidbaren Inhomogenitäten der Durchlaufentwicklungsvorrichtungen quer zur Transportrichtung herrühren. Während diese Unhomogenitäten im Normallfall, also bei der Herstellung von einzelnen fotografischen Kopien üblichen Formats, praktisch keine Rolle spielen, fallen sie jedoch bei der Herstellung von zusammengesetzten Bildern sehr störend ins Gewicht.

Durch die vorliegende Erfindung soll nun diese Schwierigkeit überwunden und ein Verfahren der gattungsgemässen Art dahingehend verbessert werden, dass Farb- und/oder Dichteunterschiede in den Trennbereichen zwischen den einzelnen Teilbildern des Gesamtbilds vermieden werden.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche 2.

Gemäss dem Grundgedanken der Erfindung werden also die von den Teilbildern jeder zweiten Spalte der Bildvolage erzeugten latenten Teilbilder verkehrt herum, also um 180° in ihrer eigenen Ebene gedreht, durch die Entwicklungsvorrichtung geführt. Auf diese Weise durchlaufen die später im zusammengesetzen Gesamtbild aneinandergrenzenden Seitenränder der Teilbilder jeweils denselben Transportpfad der Entwicklungvorrichtung und werden demzufolge gleich entwickelt.

Die Drehung der latenten Teilbilder kann im Prinzip auf zwei Weisen realisiert werden. Einmal können die die betreffenden latenten Teilbilder tragenden Abschnitte des Kopiermaterials körperlich in ihrer Ebene um 180° gedreht werden, und anderseits kann, gemäss einer besonders bevorzugten Ausführungsform der Erfindung, die Aufbelichtung der betroffenen Teilbildvorlagen um 180° gedreht erfolgen. Letzteres ist insbesondere dann sehr zweckmässig, wenn die Bildvorlage in elektronischer Form vorliegt und die Aufbelichtung aufdigitale Weise erfolgt. Die Drehung der Teilbildvorlagen lässt sich dabei softwaremässig einfach realisieren. Geeignete digitale Printer sind bekannt und bedürfen deshalb keiner näheren Erläuterung.

Im folgenden wird die Erfindung anhand der Zeichnung näher erläutert. Es zeigen:
- Fig.1: eine schematische Darstellung einer zu kopierenden Bildvorlage,
- Fig. 2: einen Ausschnitt einer Kopiermaterialbahn mit erfindungsgemäss aufbelichteten latenten Teilbildern,
- Fig. 3: einen Ausschnitt einer Kopiermaterialbahn mit konventionell aufbelichteten latenten Teilbildern,
- Fig. 4: eine Sequenz von erfindungsgemäss orientierten Kopiermaterialabschnitten mit aufbelichteten latenten Teilbildern,
- Fig. 5: eine schematische Darstellung eines erfindungsgemäss hergestellten fertigen Gesamtbilds und
- Fig. 6: eine schematische Darstellung der einzelnen Stufen des erfindungsgemässen Verfahrens.

Wie aus der Übersichtsdarstellung der Fig. 6 hervorgeht, umfasst das erfindungsgemässe Verfahren im wesentlichen drei Stufen: Eine vorzugsweise in elektronischer Form vorliegende Bildvorlage V wird in einer digitalen Belichtungseinrichtung (Printer) 10 in eine matrixförmige Anordnung von kleineren Teilbildvorlagen eingeteilt, und diese Teilbildvorlagen werden im Printer hintereinander auf eine Bahn von fotografischem Kopiermaterial aufbelichtet. Das belichtete Kopiermaterial mit den auf ihm befindlichen latenten Teilbildern wird einer Durchlaufentwicklungsvorrichtung 20 zugeführt und in dieser in konventioneller Weise nasschemisch behandelt. Das entwickelte Kopiermaterial wird dann einer Montagestufe 30 zugeführt, wo die einzelnen Teilbildkopien geeignet geschnitten und zum fertigen Gesamtbild K zusammengesetzt werden.

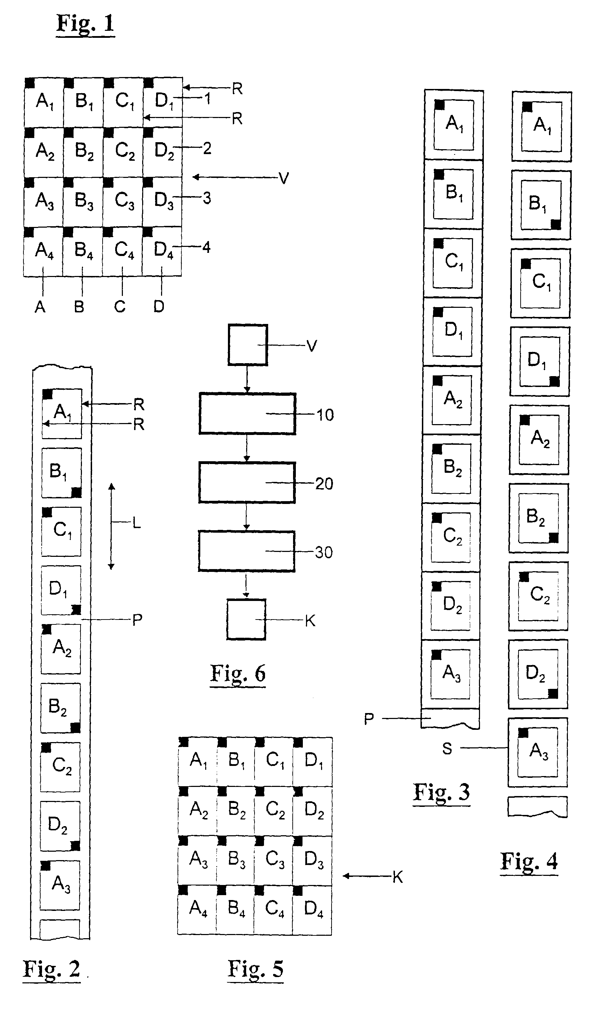

Soweit entspricht das erfindungsgemässe Verfahren dem Stand der Technik und bedarf deshalb keiner näheren Erläuterung. Die erfindungsgemässen Unterschiede liegen in der Orientierung der latenten Teilbilder während ihres Durchlaufs durch die Entwicklungsvorrichtung und werden im folgenden anhand der Figuren 1-5 im Detail beschrieben.

Die Fig. 1 zeigt eine beispielsweise Bildvorlage V, die in eine matrixförmige Anordnung von Teilbildvorlagen eingeteilt ist. Die Matrixanordnung umfasst im Beispiel vier Reihen 1-4 und vier Spalten A-D. Die einzelnen Teilbildvorlagen sind mit A₁, B₁, C₁.. .....C₄, D₄ bezeichnet. Jede Teilbildvorlage ist durch einen oberen und einen unteren Rand sowie durch zwei Seitenränder R begrenzt. Die Seitenränder R laufen parallel zu den Spalten A-D, die oberen und unteren Ränder liegen parallel zu den Reihen 1-4.

Selbstverständlich ist je nach Grösse der Bildvorlage und Vergrösserungsmassstab auch eine kleinere oder grössere Anzahl von Reihen und Spalten möglich. Im unteren Extremfall umfasst die Bildvorlage nur zwei Teilbildvorlagen in Form einer 1x2-Matrix, also eine einzige Reihe mit zwei Spalten.

Im Printer 10 werden die einzelnen Teilbildvorlagen reihenweise in einer linearen Anordnung in Längs- bzw. Transportrichtung der Kopiermaterialbahn P hintereinander auf diese aufbelichtet. Die Orientierung wird dabei so gewählt, dass die Seitenränder R der aufbelichteten Teilbildvorlagen bzw. der durch die Belichtung auf dem Kopiermaterial erzeugten latenten Teilbilder parallel zur Längs- bzw. Transportrichtung L des Kopiermaterials P liegen. Eine typische Aufbelichtungssequenz ist in Fig.2 dargestellt, wobei die latenten Teilbilder mit denselben Bezugszeichen wie die ihnen entsprechenden Teilbildvorlagen versehen sind.

Um die eingangs erwähnten, durch Inhomogentätseffekte der nachfolgenden Entwicklungsvorrichtung bedingten Farb- und/oder Dichtesprünge zu vermeiden, werden erfindungsgemäss die Teilbildvorlagen jeder zweiten Spalte verkehrt herum, also um 180° gegenüber den anderen Teilbildvorlagen in ihrer eigenen Ebene gedreht, auf das Kopiermaterial aufbelichtet. Im gezeigten Beispiel sind dies die Teilbildvorlagen B₁-B₄ und D₁ -D₄. Die entsprechenden latenten Teilbilder erscheinen also gegenüber den anderen latenten Teilbildern auf den Kopf gestellt.

Die so belichtete Kopiermaterialbahn P wird nun in Längsrichtung L der Durchlaufentwicklungsvorrichtung 20 zugeführt und dort in der üblichen Weise entwickelt. Anschliessend werden die so erzeugten Teilbildkopien in der Montagestufe 30 geschnitten und lagerichtig zum fertigen Gesamtbild K zusammengefügt (Fig.3). Die einzelnen Teilbildkopien des Gesamtbilds K sind in Fig.5 der Einfachheit halber mit denselben Bezugszeichen versehen wie die entsprechenden Teilbildvorlagen der Bildvorlage V.

Die Figuren 3 und 4 zeigen eine alternative Ausführungsform des erfindungsgemässen Verfahrens. Hierbei werden alle Teilbildvorlagen in derselben Orientierung auf das fotografische Kopiermaterial hintereinander aufbelichtet (Fig.3). Anschliessend wird dann aber die Kopiermaterialbahn in Abschnitte S vereinzelt, die jeweils ein latentes Teilbild enthalten. Diejenigen Kopiermaterialabschnitte, welche latente Teilbilder enthalten, die den Teilbildvorlagen den jeweils zweiten Spalten der Matrixanordnung entsprechen, werden nun um 180° gedreht (Fig.4). Dann werden die einzelnen Kopiermaterialabschnitte in der gezeigten Sequenz und Orientierung der Entwicklungsvorrichtung zugeführt, welche bei dieser Varaiante natürlich zur Verarbeitung von Blattmaterial ausgebildet sein muss.

Es versteht sich, dass bei beiden Varianten des erfindungsgemässen Verfahrens auch mit blattförmigem Kopiermaterial gearbeitet werden kann. Ferner ist es prinzipiell auch möglich, die Aufbelichtung der einzelnen Teilbildvorlagen nicht, wie vorstehend beschrieben, reihenweise sondern spaltenweise vorzunehmen. Allerdings ist wegen der Gefahr von Längsinhomogenitäten der Durchlaufentwicklungsvorrichtung die reihenweise Aufbelichtung vorzuziehen.

## Patentansprüche

1. Verfahren zur Herstellung von fotografischen Bildern, wobei eine Bildvorlage (V) in eine aus Zeilen (1-4) und Spalten (A-D) bestehende Matrixanordnung von Teilbildvorlagen (A₁....D₄) mit zu den Spalten der Matrixanordnung parallelen Seitenrändern (R) eingeteilt wird, mittels eines Printers (10) von den einzelnen Teilbildvorlagen auf einem fotografischen Kopiermaterial (P) durch sequentielle Aufbelichtung eine lineare Anordnung von aufeinander folgenden latenten Teilbildern erzeugt wird, wobei die Aufbelichtung so erfolgt, dass die den Seitenrändern der Teilbildvorlagen entsprechenden Seitenränder (R) der latenten Teilbilder parallel zur Längsrichtung (L) der linearen Anordnung der latenten Teilbilder verlaufen, das belichtete Kopiermaterial (P) in einer Durchlaufentwicklungseinrichtung (20) entwickelt wird, wobei von jeder Teilbildvorlage eine Teilbildkopie entsteht, und die Teilbildkopien zu einem Gesamtbild (K) zusammengesetzt werden, dadurch gekennzeichnet, dass diejenigen latenten Teilbilder (B₁-B₄,D₁-D₄), die den in jeder zweiten Spalte (B,D) der Matrixanordnung liegenden Teilbildvorlagen (B₁-B₄,D₁-D₄) entsprechen, gegenüber den latenten Teilbildern, die den Teilbildvorlagen in den anderen Spalten der Matrixanordnung entsprechen, jeweils um 180° in ihrer eigenen Ebene gedreht durch die Durchlaufentwicklungseinrichtung (20) geführt werden.

2. Verfahren nach Anspruch 1, dadurch gekennzeichnet, dass die in jeder zweiten Spalte (B,D) der Matrixanordnung liegenden Teilbildvorlagen (B₁-B₄,D₁-D₄) gegenüber den Teilbildvorlagen in den anderen Spalten der Matrixanordnung jeweils um 180° in ihrer eigenen Ebene gedreht auf das Kopiermaterial (P) aufbelichtet werden.

3. Verfahren nach einem der vorangehenden Ansprüche, dadurch gekennzeichnet, dass die Aufbelichtung auf bahnförmiges Kopiermaterial erfolgt.

4. Verfahren nach Anspruch 1, dadurch gekennzeichnet, dass Abschnitte (S) des fotografischen Kopiermaterials, welche diejenigen latenten Teilbilder (B₁-B₄,D₁-D₄) enthalten, die den in jeder zweiten Spalte (B,D) der Matrixanordnung liegenden Teilbildvorlagen entsprechen, gegenüber Abschnitten mit denjenigen latenten Teilbildern, die den Teilbildvorlagen in den anderen Spalten der Matrixanordnung entsprechen, jeweils um 180° in ihrer eigenen Ebene gedreht in die Durchlaufentwicklungseinrichtung (20) eingeführt werden.

5. Verfahren nach Anspruch 4, dadurch gekennzeichnet, dass die Aufbelichtung auf fotografisches Blattmaterial erfolgt.

6. Verfahren nach einem der vorangehenden Ansprüche, dadurch gekennzeichnet, dass eine in elektronischer Form vorliegende Bildvorlage (V) verwendet wird und die Aufbelichtung digital erfolgt.
